# EUROPÄISCHE PATENTSCHRIFT

(11) **EP 2 783 120 B1**
(45) Veröffentlichungstag und Bekanntmachung des Hinweises auf die Patenterteilung: **12.07.2017**
(21) Anmeldenummer: 12786961.8
(22) Anmeldetag: 09.11.2012
(51) Int. Cl.: F16C 19/28, F16C 33/58, F16C 33/64, F16C 33/62

(54) **WÄLZLAGER**
ROLLING BEARING
PALIER À ROULEMENT

(30) Priorität: 23.11.2011 DE 102011086933
(43) Veröffentlichungstag der Anmeldung: 01.10.2014
(73) Patentinhaber: Schaeffler Technologies AG & Co. KG, 91074 Herzogenaurach (DE)
(72) Erfinder: HEID, Silvia, 91086 Aurachtal (DE); KLÜPPEL, Joachim, 91074 Herzogenaurach (DE); HARTMANN, Cornelius, 91085 Weisendorf (DE)
(86) Internationale Anmeldenummer: PCT/EP2012/072216
(87) Internationale Veröffentlichungsnummer: WO 2013/075953

(56) Entgegenhaltungen:
- EP-A1- 1 120 577
- EP-A2- 1 262 686
- WO-A1-2009/045146
- FR-A1- 2 251 745
- US-A- 4 019 784

## Beschreibung

### Gebiet der Erfindung

Die Erfindung betrifft ein Wälzlager in Anwendungen mit geringen Drehzahlen, insbesondere in Antrieben von Flurförderfahrzeugen mit zwischen zwei radial ineinander angeordneten, zumindest teilweise gehärteten Laufringen in Laufbahnen mit auf einem quer zu einer Drehachse eines Laufrings vorgegebenen Laufbahnradius abwälzenden, mit einem vorgegebenen Kugelradius versehenen Kugeln.

### Hintergrund der Erfindung

Gattungsgemäße Wälzlager umfassen bekannterweise zwei radial ineinander geschachtelte Laufringe, nämlich einen Außenring und einen Innenring. An den einander zugewandten Umfängen der Laufringe sind Laufbahnen für Kugeln eingebracht. Die Kugeln wälzen dabei in den bevorzugt rillenförmig ausgebildeten Laufbahnen ab, so dass die Lagerringe gegeneinander wälzend um eine Drehachse verdrehbar sind. Hierbei sind zur Verbesserung des Verschleißes die Berührkontakte zwischen Kugeln und Laufbahnen nicht komplett flächig ausgebildet, indem die Radien der Laufbahnen und der Kugeln nicht exakt gleich ausgebildet sind. Die sogenannte Schmiegung gibt dabei das Verhältnis zwischen Laufbahnradius und Kugelradius an. Bekannte Wälzlager weisen beispielsweise Schmiegungen mit Verhältnissen größer 1,02 und kleiner 1,06 auf, was bedeutet, dass der Laufbahnradius 102% bis 106% des Kugelradius beträgt. Die hierdurch auftretende teilweise punktuelle Belastung der Laufringe im Bereich der Laufbahnen erfordert hohe Tragzahlen, die durch Verwendung hoch druckbelastbarer und in Einsatzhärteverfahren, die eine ausreichende Oberflächenhärte ergeben, einsetzbarer und entsprechend kostenintensiver Materialien, erzielt werden. Ein Verfahren zur Einsatzhärtung von Laufringen eines Wälzlagers ist beispielsweise aus der DE 10 2006 040 814 A1 bekannt. Derartige Verfahren sind produktionstechnisch aufwendig und kostenintensiv. Ein Kugellager einer Riemenscheibeneinheit mit Schmiegungswerten im Bereich von 0,01 bis 1,02 bzw. 1,04 ist aus der EP 1 262 686 A bekannt. Andereseits offenbart die EP 1 120 577 A1 ein Wälzlager mit mindestens einem Laufring, der ein Stahlgefüge vom Typ "unterer Bainit" und eine HRC-Härte im Bereich von 54 bis 64 HRC offenbart, um "white layer"-Korrosion zu verhindern.

### Aufgabe der Erfindung

Ausgehend von den dargelegten Nachteilen des bekannten Standes der Technik liegt der Erfindung deshalb die Aufgabe zu Grunde, ein Wälzlager in mit geringer Drehzahl drehenden Anwendungen vorzuschlagen, welches mit verringertem Produktionsaufwand herstellbar ist.

### Allgemeine Beschreibung der Erfindung

Erfindungsgemäß wird diese Aufgabe bei einem Wälzlager nach Anspruch 1 gelöst. Durch die bei verringerten Schmiegungen zunehmenden Tragzahlen kann auf eine hohe Oberflächenhärte und daher produktionsaufwendige Einsatzhärtverfahren verzichtet werden. Es hat sich hierbei als vorteilhaft erwiesen, wenn ein oder beide Laufringe mittels entsprechender Härteverfahren in der Weise durchgehärtet werden, dass ein bainitisches Gefüge der zugrundeliegenden Stahlstruktur gebildet wird. Die Härtung kann in Härteöfen mit entsprechender Temperaturführung ohne Einsatzmaterialien erfolgen. Die vergleichsweise hohe, jedoch mit gegenüber einsatzgehärteten Laufringen verringerte, für die Bildung von geringeren Tragzahlen der Laufringe infolge verringerter Verhältniszahlen der Schmiegung jedoch ausreichende Härte wird durch die Bildung von Ferritnadeln beziehungsweise Ferritplatten in Schichtung mit Carbiden gebildet. Es hat sich dabei herausgestellt, dass besonders vorteilhafte bainitische Stähle für Laufringe mit erfindungsgemäßen Schlagzähigkeiten größer gleich 67 J aufweisen, wobei entsprechende Proben des Stahls nach DIN EN 10045-1 ohne Kerbe auf Schlagzähigkeit überprüft wurden. Zudem ist von Vorteil, wenn die vorgeschlagenen bainitischen Stähle eine erfindungsgemäße maximale Härte von 58 HRC aufweisen.

Die erfindungsgemäß vorgeschlagene Kombination aus niedrigen Verhältniszahlen der Schmiegung von Laufbahnradien und Kugelradien mit Laufbahnen höherer Tragzahl ist erfindungsgemäß für gering drehzahlbeanspruchte Wälzlager mit Drehzahlen kleiner 500 Umdrehungen pro Minute vorteilhaft, so dass ein über Lebensdauer auftretender Verschleiß infolge höherer thermischer Belastung bedingt durch eine höhere Reibung unerheblich ist. Es versteht sich, dass zur Verringerung der Reibung entsprechende Schmierstoffanwendungen mit Rückhalteelementen wie kontaktbehafteter oder kontaktloser Kapselung des Wälzlagers beispielsweise zwischen den Laufringen vorgesehen werden können.

Besonders vorteilhaft sind langsam drehende Anwendungen des Wälzlagers insbesondere in Flurförderfahrzeugen. Hier können die Wälzlager zur Bewegung des Fahrzeugs in Rädern, zur Steuerung des Fahrzeugs und/oder zum Anheben von Lasten vorgesehen sein. Das Wälzlager kann dabei insbesondere in Lauf- und Stützrollen und/oder Kurvenrollen, bei welchen ein innerer Laufring als massiver Bolzen ausgebildet ist, eines Hebezeugs wie Hubgabel, Tragarm und dergleichen eines Flurförderfahrzeugs, Aufzugs oder dergleichen eingesetzt werden. Besonders vorteilhaft ist die Verwendung des vorgeschlagenen Wälzlagers in einer Hubmastrolle eines Flurförderfahrzeugs wie Gabelstapler, wie sie beispielsweise in der DE 28 03 169 A1 offenbart ist. Hierbei macht sich die Reibung eines mit geringerem Verhältnis der Schmiegung ausgebildeten Wälzlagers allenfalls in vernachlässigbarer Weise bemerkbar. Durch die durchgehärteten Materialien des oder der Laufringe ist eine hohe Belastung des Wälzlagers dennoch in vorteilhafter Weise gegeben.

Im einfachsten Fall ist das Wälzlager als einrilliges Wälzlager mit jeweils einer einzigen Laufbahn pro Laufring vorgesehen. Um Kippbeanspruchungen gegen die Drehachse abzusichern, haben sich allerdings mehrere, bevorzugt zwei axial nebeneinander angeordnete Laufbahnen pro Laufring als vorteilhaft erwiesen. Diese können auf unterschiedlichen Radien und/oder mit unterschiedlichen Laufbahnradien und Kugelradien unter Einhaltung der vorgeschlagenen Verhältniszahlen der Schmiegung vorgesehen werden. Vorteilhaft ist jedoch die Ausbildung zweier bezüglich Laufbahnradius und Kugelradius identischer Laufbahnen zur Ausbildung eines zweirilligen Wälzlagers.

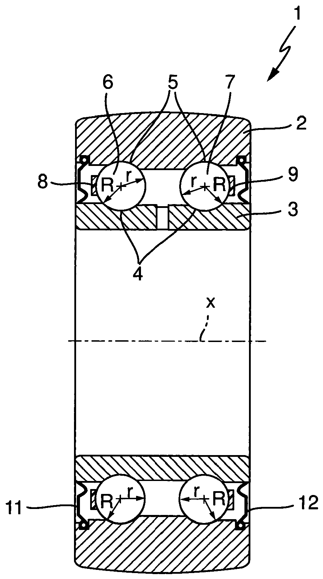

### Kurze Beschreibung der Zeichnung

Eine bevorzugte Ausführungsform des erfindungsgemäß ausgebildeten Wälzlagers wird nachfolgend unter Bezugnahme auf die beigefügte Zeichnung näher erläutert. Dabei zeigt die einzige Figur einen Schnitt durch ein erfindungsgemäß ausgebildetes Wälzlager.

### Ausführliche Beschreibung der Zeichnung

Die einzige Figur zeigt das um die Drehachse x rotationssymmetrische Wälzlager 1 mit dem als Außenring ausgebildeten Laufring 2 und dem als Innenring ausgebildeten Laufring 3. In weiteren Ausführungen kann der Innenring als Bolzen ausgebildet sein. Die Laufringe 2, 3 weisen jeweils einander zugewandt Laufbahnen 4, 5 zur axial beabstandeten Aufnahme von über den Umfang verteilten und zueinander beabstandet in den Kugelkäfigen 8, 9 aufgenommenen Kugeln 6, 7 auf. Die Kugeln 6, 7 bilden mit den Laufbahnen 4, 5 infolge ihrer axialen Beabstandung ein zweireihiges Wälzlager 1, deren Kugeln 6, 7 und Laufbahnen 4, 5 im gezeigten Ausführungsbeispiel jeweils dieselben Kugelradien r und Laufbahnradien R aufweisen.

Zur Ausbildung einer hohen Tragfähigkeit des Wälzlagers 1 wird bei aus Stahl mit bainitischem Gefüge ausgebildeten Laufringen 2, 3, die verglichen mit mittels Einsatzhärten hergestellter Laufbahnen eine hohe Tragzahl aufweisen, das Verhältnis R/r einer Schmiegung der Laufbahnradien R und der Kugelradien r verringert, so dass die Tragflächen der Kugeln 6, 7 auf ihren jeweiligen Laufbahnen 4, 5 der Laufringe 2, 3 erhöht werden, wodurch insgesamt bei geringfügig erhöhter Reibung, die bei niedrig drehenden Wälzlagern 1 unerheblich ist, eine ähnliche oder sogar verbesserte Tragfähigkeit erzielt wird. Das Wälzlager 1 ist dabei mit Verhältnissen R/r kleiner gleich 1,02 bevorzugt zwischen 1,02 und größer 1,00 ausgebildet.

Zur Verminderung der Reibung der Wälzstellen zwischen Kugeln 6, 7 und Laufbahnen 4, 5 der Laufringe 2, 3 beziehungsweise der Kugeln 6, 7 gegenüber ihren Kugelkäfigen 8, 9 ist der Ringspalt 10 zwischen den Laufringen 2, 3 zumindest teilweise mit Schmierstoff befüllt, welcher mittels radial zwischen den Laufringen an den Stirnseiten der Laufringe 2, 3 angeordneten Dichtscheiben 11, 12, welche zudem den Eintritt von Verunreinigungen wie Schmutz, Wasser und dergleichen verhindern, gegen Austreten geschützt ist.

### Bezugszeichenliste

- 1: Wälzlager
- 2: Laufring
- 3: Laufring
- 4: Laufbahn
- 5: Laufbahn
- 6: Kugel
- 7: Kugel
- 8: Kugelkäfig
- 9: Kugelkäfig
- 10: Ringspalt
- 11: Dichtscheibe
- 12: Dichtscheibe
- r: Kugelradius
- R: Laufbahnradius
- x: Drehachse

## Patentansprüche

1. Wälzlager (1) für Einsatzdrehzahlen von kleiner 500 Umdrehungen pro Minute, insbesondere in Flurförderfahrzeugen, mit zwei radial ineinander angeordneten, zumindest teilweise gehärteten Laufringen (2, 3), **dadurch gekennzeichnet, dass** mit einem vorgegebenen Kugelradius (r) versehene Kugeln (6, 7) zwischen den Laufringen (2, 3) in Laufbahnen (4, 5) mit auf einem quer zu einer Drehachse eines Laufrings (2, 3) vorgegebenen Laufbahnradius (R) abwälzen, wobei zumindest einer der Laufringe (2, 3) aus einem durchgehärteten Stahl mit bainitischem Gefüge gebildet und eine Schmiegung mit einem Verhältnis (R/r) des Laufbahnradius (R) zumindest eines Laufrings (2, 3) zum Kugelradius (r) kleiner gleich 1,02 ist, wobei der durchgehärtete Stahl des zumindest einen Laufrings (2, 3) eine Schlagarbeit größer gleich 67 J, nach DIN EN 10045-1 ohne Kerbe, aufweist und gleichzeitig eine Härte kleiner gleich 58 HRC aufweist.

2. Wälzlager (1) nach Anspruch 1, **dadurch gekennzeichnet, dass** das Verhältnis der Schmiegung zwischen 1,02 und größer 1,00 ist.

3. Wälzlager (1) nach Anspruch 1 oder 2, **dadurch gekennzeichnet, dass** axial zueinander beabstandet mehrere Laufbahnen (4, 5) für mehrere Reihen von Kugeln (6, 7) vorgesehen sind.

4. Flurförderfahrzeug mit mindestens einem Wälzlager (1) nach einem der Ansprüche 1 bis 3.

5. Flurförderfahrzeug nach Anspruch 4, wobei das Wälzlager in einer Hubmastrolle, einer Laufrolle, einer Stützrolle oder einer Kurvenrolle des Flurförderfahrzeugs angeordet ist.

6. Verwendung eines Wälzlagers nach einem der Ansprüche 1 bis 3 für ein Flurförderfahrzeug, wobei das Wälzlager (1) mit einer Einsatzdrehzahl von kleiner 500 Umdrehungen pro Minute betrieben wird.

## Claims

1. Rolling bearing (1) for operational rotation speeds of less than 500 revolutions per minute, in particular in industrial trucks, having two races (2, 3) which are arranged radially one inside the other and are at least partially hardened, **characterized in that** balls (6, 7) with a predefined ball radius (r) roll between the races (2,3) in tracks (4, 5) with a predefined track radius (R), which is transverse to an axis of rotation of a race (2, 3), wherein at least one of the races (2, 3) is made of a fully hardened steel with a bainitic structure, and an osculation with a ratio (R/r) of the track radius (R) of at least one race (2, 3) to the ball radius (r) is less than or equal to 1.02, wherein the fully hardened steel of the at least one race (2, 3) has an impact work of greater than or equal to 67 J according to DIN EN 10045-1 without notches, and at the same time has a hardness of less than or equal to 58 HRC.

2. Rolling bearing (1) according to Claim 1, **characterized in that** the ratio of the osculation is between 1.02 and greater than 1.00.

3. Rolling bearing (1) according to Claim 1 or 2, **characterized in that** there are provided, spaced axially apart from one another, multiple tracks (4, 5) for multiple rows of balls (6, 7).

4. Industrial truck having at least one rolling bearing (1) according to one of Claims 1 to 3.

5. Industrial truck according to Claim 4, wherein the rolling bearing is arranged in a lifting mast roller, a running roller, a support roller or a cam roller of the industrial truck.

6. Use of a rolling bearing according to one of Claims 1 to 3 for an industrial truck, wherein the rolling bearing (1) is operated with an operational rotation speed of less than 500 revolutions per minute.

## Revendications

1. Palier à roulement (1) pour des vitesses de rotation d'utilisation inférieures à 500 tr/m, en particulier dans des chariots de manutention, comprenant deux bagues de roulement (2, 3) au moins en partie trempées, disposées radialement l'une dans l'autre, **caractérisé en ce que** des billes (6, 7) pourvues d'un rayon de bille prédéfini (r) roulent entre les bagues de roulement (2, 3) dans des chemins de roulement (4, 5) ayant un rayon de chemin de roulement (R) prédéfini transversalement à un axe de rotation d'une bague de roulement (2, 3), au moins l'une des bagues de roulement (2, 3) étant formée d'un acier trempé à coeur avec une structure bainitique et une osculation avec un rapport (R/r) du rayon du chemin de roulement (R) d'au moins une bague de roulement (2, 3) au rayon de la bille (r) étant inférieure ou égale à 1,02, l'acier trempé à coeur de l'au moins une bague de roulement (2, 3) présentant une énergie de choc supérieure ou égale à 67 J selon DIN EN 10045-1 sans entaille et présentant simultanément une dureté inférieure ou égale à 58 HRC.

2. Palier à roulement (1) selon la revendication 1, **caractérisé en ce que** le rapport d'osculation est compris entre 1,02 et plus de 1,00.

3. Palier à roulement (1) selon la revendication 1 ou 2, **caractérisé en ce que** plusieurs chemins de roulement (4, 5) espacés axialement les uns des autres sont prévus pour plusieurs rangées de billes (6, 7).

4. Chariot de manutention comprenant au moins un palier à roulement (1) selon l'une quelconque des revendications 1 à 3.

5. Chariot de manutention selon la revendication 4, dans lequel le palier à roulement est disposé dans un rouleau de mât de levage, un galet de roulement, un galet de support ou un galet à cames du chariot de manutention.

6. Utilisation d'un palier à roulement selon l'une quelconque des revendications 1 à 3 pour un chariot de manutention, le palier à roulement (1) fonctionnant avec une vitesse de rotation d'utilisation inférieure à 500 tr/m.
